# EUROPEAN PATENT APPLICATION

(11) **EP 3 543 092 A1**
(43) Date of publication of application: **25.09.2019**
(21) Application number: 17871337.6
(22) Date of filing: 15.11.2017
(51) Int. Cl.: B62D 35/02

(54) **SUSPENDED AUTOMOBILE RUNNING IN NATURAL STATE**

(30) Priority: 15.11.2016 CN 201611006001
(71) Applicant: Zhu, Xiaoyi, Shenzhen, Guangdong 518000 (CN)
(72) Inventor: Zhu, Xiaoyi, Shenzhen, Guangdong 518000 (CN)
(74) Representative: Dall'Olio, Christian
(86) International application number: PCT/CN2017/111092
(87) International publication number: WO 2018/090928

(57) **Abstract**

An automobile comprises an automobile body, wheels, suspension devices and spoilers. The path of a fluid flowing through lower spoiler surfaces is longer than the path of a fluid flowing through the upper spoiler surfaces, so that a lift force generated in the traveling process of the automobile is reduced or even eliminated. The common knowledge that the wheels have to bear the dead weight of the automobile, loads, and all weights generated by the gravitational acceleration is changed, the automobile body generates a lift force to obviously reduce the self weight, and the road holding of the automobile is improved after the wheels eliminate the lift force, so that the automobile can travel more safely while more energy is saved; and the seemingly-contradictory structure so designed that the automobile body generates a lift force and the wheels eliminate the lift force is reasonably and compatibly applied to the invention.

## Description

### Technical Field

The invention relates to the technical field of vehicle design and manufacturing, in particular to a suspension automobile capable of traveling in a natural state.

### Description of Related Art

Due to the common knowledge which has been developed for more than one hundred years since the appearance of automobiles, that the wheels have to bear the dead weight of the automobiles, loads, and all weights generated by the gravitational acceleration, severe energy waste is caused.

Due to the fact that because the path of fluids flowing through the upper part of the automobile body is longer than the path of fluids flowing through the lower part of the automobile body, a lift force is generated. An approach adopted by the traditional automobiles to solve this problem is to overcome the lift force by increasing the dead weight of the automobile body, but this approach causes severe energy waste, and the traditional automobiles need to be further improved.

### Brief Summary of the Invention

The technical issue to be settled by the invention is to change the common knowledge that the wheels have to bear the dead weight of the automobiles, loads, and all weights generated by the gravitational acceleration, and to provide an energy-saving automobile which is provided with an automobile body capable of generating a lift force to overcome the self weight as well as wheels capable of eliminating the lift force to improve the road holding and has better safety performance.

To settle the above technical issue, the specific technical solution of the automobile capable of overcoming the lift force of the invention is as follows:
An automobile comprises an automobile body connected with wheels through elastic devices and suspension devices, and is characterized in that the automobile further comprises connecting devices and spoilers, wherein the connecting devices arranged on a lower automobile body part are connected with the elastic devices and are connected with the spoilers through a plurality of connecting rods, the spoilers are arranged between the left and right wheels at the front as well as between the left and right wheels at the back of the lower automobile body part, and flow disturbance faces used for lengthening fluid flowing paths are arranged on lower spoiler surfaces, so that the path of a fluid flowing through a second fluid channel in the lower spoiler surfaces is longer than the path of the fluid flowing through a first fluid channel in the upper spoiler surfaces, and a pressure difference is generated; and the connecting devices are connected with the wheels through the suspension devices, a downward pressure difference generated by the spoilers reduces or eliminates a lift force of the wheels through the connecting devices and the suspension devices.

The invention has the following beneficial effects: in more than one hundred years, lift force of automobiles is overcome by increasing the lift force of the automobile body without exception, and consequentially, severe energy waste is caused; however, the spoilers are arranged at the bottom of the automobile of the invention and are connected with the wheels, so that the path of a fluid flowing through the lower spoiler surfaces is longer than the path of the fluid flowing through the upper spoiler surfaces, and a downward pressure difference is generated to reduce or even eliminate the lift force generated in the traveling process of the automobile, and thus, the road holding of the wheels is improved, the safety performance of the automobile in the traveling process is improved, energy consumption is obviously reduced, and the automobile capable of eliminating the lift force is provided.

Another technical solution of an automobile provided with an automobile body capable of generating a lift force weight as well as wheels capable of eliminating the lift force of the invention is as follows:
The automobile comprises an automobile body connected with wheels through elastic devices and suspension devices, and is characterized in that the automobile further comprises connecting devices and spoilers, wherein the connecting devices arranged on a lower automobile part and are connected with the elastic devices and are connected with the spoilers through a plurality of connecting rods, the spoilers are arranged between the left and right wheels at the front as well as the left and right wheels at the back of the lower automobile body part, and flow disturbance faces used for lengthening fluid flowing paths are arranged on lower spoiler surfaces, so that the path of a fluid flowing through a second fluid channel in the lower spoiler surfaces is longer than the path of the fluid flowing through a first fluid channel in the upper spoiler surfaces, and a pressure difference is generated; and the connecting devices are connected with the wheels through the suspension devices, a downward pressure difference generated by the spoilers reduces or eliminates a lift force of the wheels through the connecting devices and the suspension devices.

A flow disturbance face used for prolonging a fluid flowing path is arranged on the upper automobile body part, so that the path of a fluid flowing through the upper automobile body part is longer than a path of the fluid flowing through the lower automobile body part, and thus, the wheels reduce or eliminate a lift force when the automobile body generates a lift force.

The invention has the following beneficial effects: due to the common knowledge that the wheels have to bear the dead weight of the automobiles, loads, and all weights generated by the gravitational acceleration, severe energy waste is caused; on the contrary, in the invention, the path of the fluid flowing through the upper automobile body part is longer than the path of the fluid flowing through the lower automobile body part, so that the automobile body generates a lift force to overcome the self weight; and meanwhile, the spoilers connected with the wheels are arranged at the bottom of the automobile, and the path of the fluid flowing through the lower spoiler surfaces is longer than the path of the fluid flowing through the upper spoiler surfaces, so that a pressure difference is generated, the road holding of the wheels is improved, and the safety performance is improved.

The seemingly-contradictory structure so designed that the automobile body generates a lift force to overcome the self weight and the wheels eliminate the lift force to improve the road holding is reasonably and compatibly applied to the invention, and the novel energy-saving automobile is provided.

### Brief Description of the Several Views of the Drawings

FIG. 1 is structural side view 1 of the automobile of the invention;
FIG. 2 is a structural side view 2 of the automobile of the invention;
FIG. 3 is a structural rear view of the automobile of the invention;

### Reference Signs:

1, automobile body; 2, wheel; 3, suspension device; 4, elastic device; 5, spoiler;
6, connecting device; 7, road surface; 101, lower automobile body part; 102, upper automobile body part;
501, upper spoiler surface; 502, lower spoiler surface; 503, first channel;
504, second channel; 505, flow disturbance face; 601, connecting rod; 602, elastic strip.

### Detailed Description of the Invention

The key conception of the invention lies in that: wheels at the bottom of the automobile are connected with a spoiler through a plurality of connecting devices and connecting rods, so that the path of a fluid flowing through a second fluid channel in the lower surface of the spoiler is longer than the path of the fluid flowing through a first fluid channel in the upper surface of the spoiler, and a pressure difference is generated to reduce or eliminate a lift force of the wheels; and meanwhile, the path of the fluid flowing through the upper part of the automobile body is longer than the path of the fluid flowing through the lower part of the automobile body, so that a lift force is generated by the automobile body; and the automobile body generates a lift force while the wheels eliminate the lift force, so that the automobile body capable of generating a lift force and the wheels capable of eliminating the lift force are reasonably combined.

### Embodiment 1

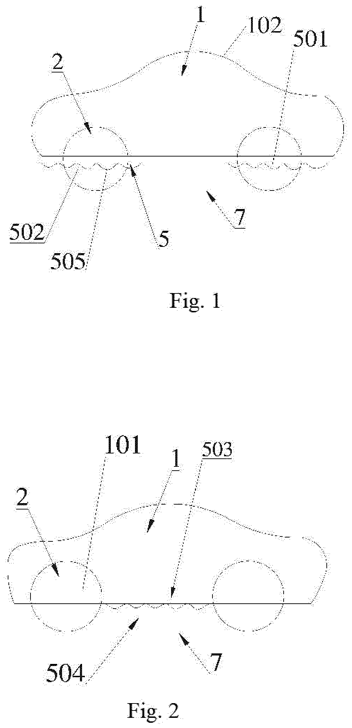

As shown in FIGs. 1-3, an automobile comprises an automobile body 1, wheels 2, suspension devices 3 and spoilers 5. The spoilers 5 are located at the bottom of the automobile and are respectively located between the left and right wheels 2 at the front as well as between the left and right wheels 2 at the back of a lower automobile body part 101. Each spoiler 5 comprises an upper spoiler surface 501 and a lower spoiler surface 502, wherein the upper spoiler surface 501 is a plane, the lower spoiler surface 502 is provided with a flow disturbance face 505, the flow disturbance face 505 is formed by one or more selected from concave or convex arcs, triangles and trapezoids uniformly distributed on the lower spoiler surface 502, and the flow disturbance face 505 is formed by arcs in the figures; and it is the most common practice in this field to adopt a flow disturbance face formed by a plurality of uniformly-distributed arcs, triangles or trapezoids to lengthen the fluid flowing path.

In this embodiment, a first channel 503 is formed between the upper spoiler surfaces 501 and the lower automobile body part 101, and a second channel 504 is formed between the lower spoiler surfaces 502 and a road surface 7. The path of a fluid flowing through the second channel 504 is longer than the path of the fluid flowing through the first channel 503, so that a downward pressure difference is generated; the pressure difference generated between the first channel in the upper spoiler surfaces and the second channel in the lower spoiler surfaces directly acts on the corresponding wheels 2 below, so that the road holding of the wheels 2 is improved under the effect of the downward pressure, the influence of the lift force generated in the traveling process of the automobile on the road holding of the wheels 2 is reduced, and therefore, the safety performance is improved.

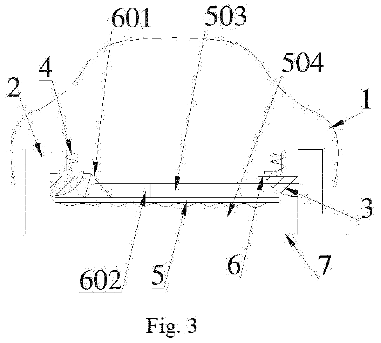

As shown in FIG. 3, the wheels 2 are connected with elastic devices 4 through the suspension devices 3 and connecting devices 6. Each elastic device 4 has an end connected with the lower automobile body part 101 and an end connected with the corresponding connecting device 6. Each elastic device 4 comprises an elastic piece, which can be an elastic element such as a spring. The elastic devices 4 are hydraulic or pneumatic components capable of achieving flexible connection, and this is a common connection manner in this field. Each connecting device 6 comprises at least two connecting rods 601. At least two connecting rods 601 are arranged between each left wheel 2 and the corresponding right wheel 2 and are fixedly connected with the corresponding spoiler 5.

Elastic connection, hydraulic connection, pneumatic connection or other flexible connection manners are adopted by the connection rods 601, which have the effect of being controlled to contract or expand the spoilers 5 around (in front-back and left-right directions) and to decrease or increase the distance from the lower surfaces 502 of the spoilers 5 to the road surface 7, and then, the lift force generated by the automobile is controlled.

Furthermore, each connecting device is connected with the corresponding spoiler 5 through a firm frame structure formed by connection of a plurality of connecting rods, so that the connection stability of the spoiler 5 is improved.

In this embodiment, each connecting device 6 further comprises a plurality of elastic strips 602 and is connected with the corresponding spoiler 5 through the plurality of elastic strips 602, so that the stability of the spoiler 5 is improved. The elastic strips 602 are connected between the connecting rods 601 and the spoilers 5, or are connected between the lower automobile body part 101 and the connecting rods 601 and/or the spoilers 5, so that the stability of the spoilers 5 is further improved, and the influence of vibrations generated in the traveling process of the automobile on the spoilers 5 is reduced or eliminated. The elastic strips 602 can also be omitted.

In this embodiment, the connecting devices 6 are connected with the spoilers 5 through the connecting rods 601. The spoilers 5 are arranged between the left and right wheels 2 at the front as well as between the left and right wheels 2 at the back, so that in the traveling process of the automobile, and the path of the fluid flowing through the first channel 503 in the upper surfaces of the spoilers 5 is shorter than the path of the fluid flowing through the second channel 504 in the lower surfaces of the spoilers 5, so that a downward pressure difference is generated, and a downward pressure generated by the spoilers 5 directly acts on the correspondingly wheels 2.

Specifically, the connecting devices are connected with the elastic devices, so that when the automobile body generates a lift force, the elastic devices flexibly connected with the wheels will not drive the wheels to generate a lift force; and the downward pressure generated by the upper surfaces and lower surfaces of the spoilers 5 directly acts on the connecting devices 6 through the connecting rods 601 and the elastic strips 602 and then acts on the wheels 2 connected with the suspension devices 3, so that the lift force generated in the traveling process of the automobile is reduced or even eliminated, the road holding of tires is improved, and accordingly, the safety performance of the automobile is improved.

In this embodiment, as shown in FIG. 2, the spoiler 5 corresponds to the whole bottom area of automobile. Or, the spoilers 5 are located between the left and right wheels 2 at the front as well as between the left and right wheels 2 at the back, as shown in FIG. 1. Or, similarly, the spoiler 5 is located at least one of the front portion, the middle and the rear portion of the bottom of the automobile body 1, and the area of the spoiler 5 can be expanded or narrowed as required. Or, the spoiler is arranged on a local part or the whole area of the bottom of the automobile as required.

### Embodiment 2

This embodiment is different from embodiment 1 in that an upper automobile body part 102 of the automobile body 1 is locally or entirely provided with a flow disturbance face 505 (not shown) to lengthen the path of the fluid flowing path and is identical with the flow disturbance face 505 at the bottom of the automobile, so that a lift force is generated due to different fluid flowing paths and different flow velocities between the upper automobile body part 102 and the lower automobile body part 101 of the automobile body 1.

Generally, a lift force will be generated in the traveling process due to different flow velocities of the upper part and the lower part of the automobiles and may reduce the road holding of the wheels, which in turn endangers the safety. The weight of the automobile body of traditional automobiles is increased to overcome the lift force. However, because it is the high speed that results in failure to overcome the lift force, which in turn causes car crashes, this approach actually cannot overcome the lift force, and a large quantity of energy is wasted.

The automobile of the invention has the following differences:
1. The upper automobile part 102 is provided with the flow disturbance face 505 to lengthen the fluid flowing path, so that the automobile body 1 generates a greater lift force to realize suspension driving due to the different flow velocities of the upper automobile body part and the lower automobile body part, and with the increase of the lift force generated by the automobile body 1, more weight of the automobile body can be overcome, and more energy can be saved.
2. A large downward pressure which is generated in the traveling process of the automobile due to the different flow velocities on the upper surface and the lower surface of the spoiler 5 directly acts on the wheels to reduce or eliminate the lift force, so that the road holding of the automobile is improved, and the automobile can save more energy and can run more safely.
3. The seemingly-contradictory structure so designed that the automobile body generates a lift force and the wheels eliminate the lift force is reasonably and compatibly applied to the automobile of the invention.

Thus, the common knowledge which has been developed for more than one hundred years since the appearance of automobiles that the wheels bear the dead weight of automobiles, loads, and all weights generated by the gravitational acceleration is changed. The wheels 2 of traditional automobiles are connected with the automobile body 1 through suspension devices and elastic devices 4 so as to reduce vibrations generated by the wheels; however, due to the fact that a lift force is generated in the traveling process due to the different flow velocities of the upper automobile body part and the lower automobile body part, the wheels are driven to generate a lift force synchronously.

As shown in FIG. 3, the automobile of the invention is structurally different from traditional automobiles in the following aspects: the lower automobile body part 101 is connected with the connecting devices 6 through the elastic devices 4, and the connecting devices 6 are arranged between the lower portions of the elastic devices 4 and the suspension devices 3 and are connected with the spoilers 5 through the connecting rods 601 and the elastic strips 602, so that a downward pressure is generated due to the different flow velocities of the upper surfaces and the lower surfaces of the spoilers 5 and directly acts on the wheels 2 through the suspension devices 3, so that the elastic devices 4 used for flexible connection will not drive the wheels 2 to generate a lift force when the automobile body 1 generates a lift force; and similarly, according to the common knowledge, the connecting devices 6 (not shown in the figures: common practice in the art) are arranged between the lower automobile body part 101 and upper portions of the elastic devices 4, so that the wheels 2 will not be driven to generate a lift force when the automobile body 1 generates a lift force.

The upper portions and the lower portions of the elastic devices 4 used for flexible connection are connected with the connecting devices 6, so that the suspension devices 3 and the wheels 2 will not be driven to generate a lift force while the automobile body generates a lift force. Through the flexible connection of the elastic devices 4, the lift force generated by the automobile body 1 serving as a load space reduces the dead weight of the automobile body 1, the road holding of the wheels 2 is improved after the lift force is eliminated, and thus, the automobile can travel more safely while more energy is saved. The seemingly-contradictory structure so designed that the automobile body generates a lift force and the wheels 2 eliminate the lift force is reasonably and compatibly applied to the automobile of the invention.

When the automobile runs, a fluid passes around the automobile, and an upward lift force will be inevitably generated due to the different paths and velocities of the fluid passing through the upper part and the lower part of the automobile body 1. The flow disturbance face is arranged on the upper automobile body part and increases the lift force generated by the automobile, so that the automobile can suspend. The flow disturbance face 505 is arranged on the lower spoiler surface 502 between the two front wheels and the two rear wheels at the bottom of the automobile, so that the path of the fluid flowing through the second channel 504 formed between the lower spoiler surface 502 and the road surface 7 is longer than the path of the fluid flowing through the first channel 503 formed between the upper spoiler surface 501 and the lower automobile body part 101, a pressure difference is generated, and a lift force of the wheels 2 is reduced or eliminated.

When the automobile runs at a high speed, the automobile body generates an upward lift force, and with the increase of the lift force, the automobile body partially or entirely suspends. The so-called suspension automobile of the invention does not refer to that the automobile runs by rising away from the road surface by a certain distance, but refers to that the weight of the automobile is reduced in the traveling process by changing the downward gravity distribution condition formed by the weight of the traditional automobile based on the fact that the upward lift force will undoubtedly reduce the downward gravity generated by the dead weight of the automobile body 1. Power consumption of the automobile depends on the weight of the automobile, and power consumption of the automobile in the traveling process is naturally reduced along with the weight reduction of the automobile. The greater the difference between the paths of the fluid respectively flowing through the upper part and the lower part of the automobile body 1, more downward gravity can be overcome with the increase of the lift force, and more energy is saved.

As the large-area spoilers 5 at the bottom of the automobile are connected with the connecting devices 6 through the connecting rods 601 in the traveling process of the automobile, small vibrations will be generated under a high speed. To eliminate the vibrations generated by the spoilers 5, one ends of the multiple elastic strips 602 are connected with the spoilers 5, and the other ends of the multiple elastic strips 602 are connected with the connecting devices 6; or, one ends of the elastic strips 602 are connected with the lower part 101 of the automobile body 1, and the other ends of the elastic strips 602 are connected with the spoilers 5, wherein the elastic strips 602 are non-rigid flexible connecting devices such as springs, hydraulic elements or pneumatic elements, so that vibrations of the spoilers 5 are eliminated.

In this embodiment, the frame structures formed by the plurality of connecting rods 601 are fixedly connected with the spoilers 5, so that the elastic strips 602 can be omitted. The energy-saving principle of the energy-saving automobile of the invention is as follows: the automobile body 1 serving as the whole load space is very heavy, while the wheels 2 are light; the dead weight of the load space is reduced by the lift force generated by the automobile body 1, while the light wheels 2 reduce or eliminate the lift force generated in the traveling process of the automobile.

In this embodiment, the flow disturbance face 505 is arranged on the front portion, the middle or the rear portion of the upper automobile body part 102; or, the whole upper automobile body 102 is provided with a flow disturbance face 505, so that the automobile body can generate a greater lift force; or, the flow disturbance face 505 is arranged on a local part or the whole area of the upper automobile body 102, so that the automobile can better travel in a suspension manner as required; or, the upper surface 501 of the spoiler 5 is provided with a flow disturbance face 505 under the condition where the path of the fluid flowing through the upper spoiler surface 501 is shorter than the path of the fluid flowing through the upper automobile body part 102 and is shorter than the path of the fluid flowing through the lower spoiler surface 502.

In this embodiment, the elastic devices 4 are non-rigid flexible connecting devices such as springs, hydraulic elements or pneumatic elements, which are used for connection, buffering and shock absorption.

The connecting rods 601 and the elastic strips 602 are fixedly connected with the spoilers and are hydraulic elements or pneumatic elements for non-rigid flexible connection, so that vibrations generated by the spoilers are reduced.

In this embodiment, the spoilers are respectively arranged between the left and right wheels at the front as well as between the left and right wheels at the back of the bottom of the automobile body, or in the middle of the bottom of the automobile body, or required a local area of the bottom of the automobile body, or the whole area of the bottom of the automobile body, so that through reasonable design of the flow disturbance faces 505, a greater lift force can be generated by the upper part and the lower part of the automobile body 1 for suspension, and the wheels 2 can eliminate more lift force.

The downward pressure generated by the upper surface and the lower surface of the spoiler uniformly improves the road holding of the four wheels, at the corresponding positions, of the automobile. The automobile runs by a distance corresponding to one circle of the wheels every time the wheels turn by one circle, energy losses caused by at least partial idling of the wheels under the effect of the lift force of the automobile is avoided, and thus, energy is saved.

The seemingly-contradictory structure so designed that the automobile body generates a lift force and the wheels eliminate the lift force is reasonably and compatibly applied to the automobile of the invention. The principle of the invention is not only applicable to various cars, but also applicable to large automobiles such as buses, minibuses, trucks and container trucks.

## Claims

1. An automobile, comprising an automobile body connected with wheels through elastic devices and suspension devices, wherein the automobile further comprises connecting devices and spoilers, the connecting devices arranged on a lower automobile body are connected with the elastic devices and are connected with the spoilers through a plurality of connecting rods, the spoilers are arranged between the left and right wheels at a front as well as between the left and right wheels at a back of the lower automobile body part, and flow disturbance faces used for lengthening fluid flowing paths are arranged on lower spoiler surfaces, so that a path of a fluid flowing through a second fluid channel in the lower spoiler surfaces is longer than a path of the fluid flowing through a first fluid channel in upper spoiler surfaces, and a pressure difference is generated; and the connecting devices are connected with the wheels through the suspension devices, and a downward pressure difference generated by the spoiler reduces or eliminates a lift force of the wheels through the connecting devices and the suspension devices.

2. The automobile according to Claim 1, wherein the connecting devices are connected with the elastic devices, so that the elastic devices used for flexible connection will not drive the wheels to generate a lift force when the automobile body generates a lift force.

3. The automobile according to Claim 1, wherein the spoilers are arranged on a front portion, a middle or a rear portion of a bottom of the automobile body; or, the spoilers correspond to a whole area of a bottom of the automobile; or, the spoilers are arranged on local areas or the whole area of the bottom of the automobile body.

4. The automobile according to Claim 1, wherein a flow disturbance face is arranged on each said lower spoiler surface, is formed by concave or convex arcs, triangles or trapezoids and is used for lengthening the fluid flowing path.

5. The automobile according to Claim 1, wherein a first channel is formed between upper spoiler surface and the lower automobile body part, a second channel is formed between the lower spoiler surfaces and a road surface, and a path of the fluid flowing through the second channel is longer than a path of the fluid flowing through the first channel, so that a pressure difference is generated and acts on the wheels.

6. The automobile according to Claim 1, wherein the automobile further comprises elastic strips, and the connecting devices are connected with the spoilers through the plurality of connecting rods; or, the connecting devices are connected with the spoilers through the plurality of connecting rods and the plurality of elastic strips.

7. The automobile according to Claim 6, wherein the connecting rods or the elastic strips are elastic, hydraulic or pneumatic devices used for eliminating vibrations generated by the spoilers.

8. The automobile according to Claim 1, wherein the automobile further comprises the elastic devices which are springs, hydraulic components or pneumatic components.

9. An automobile, comprising an automobile body connected with wheels through elastic devices and suspension devices, wherein the automobile further comprises connecting devices and spoilers, the connecting devices arranged on a lower automobile body are connected with the elastic devices and are connected with the spoilers through a plurality of connecting rods, the spoilers are arranged between the left and right wheel at the front as well as between the left and right wheels at the back of the lower automobile body part, and flow disturbance faces used for lengthening fluid flowing paths are arranged on lower spoiler surfaces, so that a path of a fluid flowing through a second fluid channel in the lower spoiler surfaces is longer than a path of the fluid flowing through a first fluid channel in upper spoiler surfaces, and a pressure difference is generated; and the connecting devices are connected with the wheels through the suspension devices, and a downward pressure difference generated by the spoiler reduces or eliminates a lift force of the wheels through the connecting devices and the suspension devices;
a flow disturbance face used for lengthening a fluid flowing path is arranged on an upper automobile body part, so that a path of the fluid flowing through the upper automobile body part is longer than a path of the fluid flowing through the lower automobile body part, and thus, the wheels reduce or eliminate a lift force when the automobile body generates a lift force.

10. The automobile according to Claim 9, wherein the connecting devices are connected with the elastic devices, so that the elastic devices used for flexible connection will not drive the wheels to generate a lift force when the automobile body generates the lift force.

11. The automobile according to Claim 9, wherein the spoilers are arranged on a front portion, a middle or a rear portion of a bottom of the automobile body; or, the spoilers correspond to a whole area of a bottom of the automobile; or, the spoilers are arranged on local areas or the whole area of the bottom of the automobile body.

12. The automobile according to Claim 9, wherein the flow disturbance face is arranged on at least one of a front portion, a middle or a rear portion of the upper automobile body part and is located in a local area or a whole area of the upper automobile body part.

13. The automobile according to any one of Claims 9 and 11-12, wherein the flow disturbance face is formed by concave or convex arcs, triangles or trapezoids and is used for lengthening the fluid flowing path.

14. The automobile according to Claim 9, wherein a first channel is formed between upper spoiler surfaces and the lower automobile body part, a second channel is formed between the lower spoiler surfaces and a road surface, and a path of the fluid flowing through the second channel is longer than a path of the fluid flowing through the first channel, so that a pressure difference is generated and acts on the wheels.

15. The automobile according to Claim 9, wherein the automobile further comprises the elastic strips, and the connecting devices are connected with the spoilers through the plurality of connecting rods; or, the connecting devices are connected with the spoilers through the plurality of connecting rods and the elastic strips.

16. The automobile according to Claim 9 or 15, wherein the connecting rods or the elastic strips are elastic, hydraulic or pneumatic devices and are used for eliminating vibrations generated by the spoilers.

17. The automobile according to Claim 9 or 10, wherein the automobile further comprises elastic devices which are springs, hydraulic components or pneumatic components.
